# FASCICULE DE BREVET EUROPEEN

(11) **EP 2 506 236 B1**
(45) Date de publication et mention de la délivrance du brevet: **16.07.2014**
(21) Numéro de dépôt: 12160910.1
(22) Date de dépôt: 23.03.2012
(51) Int. Cl.: G08G 5/00

(54) **Procédé et dispositif de gestion automatique du profil vertical d'un plan de vol d'un aéronef.**
Verfahren und Vorrichtung zur automatischen Verwaltung des vertikalen Profils des Flugplans eines Flugzeugs
Method and device for automatically managing the vertical profile of an aircraft flight plan.

(30) Priorité: 29.03.2011 FR 1152603
(43) Date de publication de la demande: 03.10.2012
(73) Titulaire: Airbus Opérations SAS, 31060 Toulouse (FR)
(72) Inventeur: Wachenheim, Maxime, 31500 TOULOUSE (FR); Daste, Pierre, 31000 TOULOUSE (FR); Bouchet, Christophe, 31300 TOULOUSE (FR); Lanoix, Alexandre, 31470 FONTENILLES (FR); Merat, Romain, 31000 TOULOUSE (FR)
(74) Mandataire: Gevers France

(56) Documents cités:
- WO-A2-02/25214
- US-A1- 2003 139 877
- US-A1- 2010 250 026
- US-B1- 6 389 355

## Description

La présente invention concerne un procédé et un dispositif de gestion automatique du profil vertical d'un plan de vol d'un aéronef, en particulier d'un avion de transport.

On sait qu'un plan de vol comporte généralement des points de route (« waypoints » en anglais) que doit survoler l'aéronef, des informations (altitude, vitesse,...) relatives à ces points de route, ainsi que des informations concernant des branches entre les différents points de route. Un tel plan de vol permet de construire une trajectoire de vol qui comprend une trajectoire latérale définie dans le plan horizontal et une trajectoire verticale (ou profil vertical) définie dans le plan vertical.

La présente invention relève, plus particulièrement, du domaine de la navigation et concerne une fonctionnalité de gestion du vol relative à un système de gestion de vol de type FMS (« Flight Management System » en anglais). Un tel système permet la planification, la gestion, ainsi que la prédiction du vol, à la fois dans le plan horizontal et dans le plan vertical. Plus particulièrement, la présente invention cible l'architecture des éléments destinés à la gestion du plan de vol vertical (profil vertical).

Afin d'aider au pilotage lors de vols d'aéronefs civils et militaires, différents types d'opérations peuvent être définis, chacune desdites opérations permettant d'effectuer une ou plusieurs consignes particulières. Par exemple dans le domaine civil, il existe une opération permettant un vol à un Mach constant entre deux points (appelée « CMS » de l'expression anglaise « Constant MACH Segment »), et une opération concernant un changement d'altitude depuis un point particulier (appelée « STEP FROM »). Dans le domaine militaire, il est possible d'effectuer des opérations tactiques comme un vol à vitesse constante entre deux points, un vol à altitude et vitesse constantes entre deux points, un changement d'altitude vers un point particulier (appelé « STEP TO »), ainsi que d'autres opérations militaires spécifiques comme un largage (« DROP ») ou un ravitaillement en vol (« AAR » pour « Air to Air Refuelling »).

Chacune de ces opérations est gérée de manière indépendante par le système de gestion du vol et possède des propriétés et des règles spécifiques et différentes.

Aussi, la problématique associée à la définition du profil vertical réside dans :
- la multiplicité des manoeuvres possibles, due à des opérations militaires ou civiles diverses, impliquant la définition de règles spécifiques pour gérer chacune d'elles ;
- la combinatoire résultant des enchaînements et des superpositions de ces différentes opérations ; et
- l'impossibilité de gérer les transitions entre deux paliers successifs, ce qui réduit les possibilités d'applications militaires.

De plus, différentes opérations peuvent, parfois, se superposer au moins partiellement (par exemple un segment à vitesse constante peut être superposé en partie à une phase de montée), ce qui accroît la complexité de la situation et rend difficile la définition d'un système qui soit robuste à toutes les situations susceptibles d'être rencontrées.

En raison de l'enchaînement de multiples éléments de plan de vol, pour les opérations militaires et civiles, un problème de combinatoire apparaît donc. En effet, chaque élément du plan de vol présente sa propre complexité, sa propre implémentation (algorithmes spécifiques et dédiés), ce qui en fait une entité unique. Par exemple, un changement de palier dépend de deux paramètres qui sont le point de route de début de changement de palier et l'altitude du palier à atteindre. A l'inverse, un segment à Mach constant dépend de deux points de route (de début, et de fin), ainsi que de la consigne Mach entre ces points de route. De ce fait, l'enchaînement de ces différentes phases se complexifie dès lors qu'une évolution a lieu au niveau de ces opérations. Si l'on ajoute de nouveaux types d'opérations ou que l'on modifie certaines caractéristiques de ces opérations, l'enchaînement tout entier des phases doit être revu.

Par exemple, lors d'un enchaînement d'un ravitaillement en vol et d'un largage par exemple, il devient complexe de définir une transition adéquate, chaque élément présentant ses propres particularités et transitions.

Outre la complexité ajoutée par les phases militaires, la problématique est également liée à l'impossibilité de gérer les phases de transition. Ces phases de transition sont nécessaires dans les opérations militaires et plus particulièrement dans l'enchaînement de celles-ci. Par exemple lors d'un largage, il est parfois nécessaire de contrôler la pente de montée/descente vers l'altitude de largage de manière à ne pas perturber la préparation du largage (pour éviter le glissement d'objets à larguer ou la perte d'équilibre de parachutistes notamment).

Par ailleurs, les éléments du plan de vol existant dans le domaine civil ne permettent pas de gérer les transitions entre paliers. Aussi, une généralisation des modes civils au domaine militaire entraînerait une complexité additionnelle en raison des phases supplémentaires à gérer. En effet, l'impossibilité de gérer les transitions n'est pas adaptée au domaine militaire qui exige des transitions particulières pour réaliser les différentes phases de vol. Une telle évolution complique grandement la mise en oeuvre des éléments du plan de vol et le séquençage de ces éléments à la fois pour le pilote et pour le système qui doit gérer le plan de vol (ce qui implique également une complexité accrue dans le développement du système FMS, avec une multitude d'algorithmes). Par conséquent, les solutions existant dans le domaine civil ne sont pas adaptées aux applications militaires et ne permettent pas de gérer de façon satisfaisante les deux types de plan de vol à la fois.

Par ailleurs, on connaît :
- par le document US-2003/0139877, un procédé et un dispositif d'assemblage d'un plan de vol ;
- par le document US-6 389 355, un procédé et un dispositif pour afficher et éditer un plan de vol ;
- par le document US-2010/0250026, un dispositif de navigation interactif, comprenant au moins un écran de navigation susceptible d'afficher une représentation du plan de vol ; et
- par le document WO-02/25214, un système graphique et un procédé pour définir des demandes des pilotes.

La présente invention concerne un procédé de gestion automatique du profil vertical d'un plan de vol d'un aéronef, en particulier d'un avion de transport, comprenant des points de route que doit survoler ledit aéronef, qui permet de remédier aux inconvénients précités.

A cet effet, selon l'invention, ledit procédé est remarquable en ce que :
a) on prévoit des moyens permettant à un opérateur d'entrer des paramètres de gestion ;
b) on détermine automatiquement une pluralité de sections de vol successives standardisées à partir de ces paramètres de gestion, chaque section de vol :
   - correspondant à l'un d'une pluralité de types prédéterminés de sections de vol (dont chacun est régi par un ensemble de règles uniques prédéterminées) et étant définie entre un point de début et un point de fin de section ; et
   - comprenant à la fois une phase de transition qui permet d'atteindre un palier et qui présente des caractéristiques particulières et ledit palier qui présente également des caractéristiques particulières, lesdits paramètres de gestion permettant de définir au moins certaines desdites caractéristiques ;
c) on assemble ensemble lesdites sections de vol successives ainsi déterminées de manière à former automatiquement le profil vertical du plan de vol, le point de fin d'une section de vol quelconque correspondant le cas échéant au point de début de la section de vol qui lui succède directement. Le profil vertical du plan de vol est mis à jour de manière automatique afin de satisfaire à la compatibilité des sections de vol ; et
d) on fournit le profil vertical du plan de vol ainsi formé à des moyens utilisateurs (moyens d'affichage, moyens de guidage,...).

Ainsi, grâce à l'invention, on prend en compte un nouvel élément dans la définition du plan de vol, à savoir la section de vol (« cruise section » en anglais). Cette section de vol représente un élément générique qui, de part ses propriétés, permet de modéliser n'importe quel élément (ou partie) de vol qu'il soit civil ou militaire, ainsi que les transitions associées. Le plan de vol est donc constitué d'un enchaînement de sections de vol, chacune étant affectée de propriétés différentes.

On obtient ainsi une harmonisation et une simplification du plan de vol. Comme précisé ci-dessous, cette simplification s'applique également à toute nouvelle évolution du plan de vol, telle que l'ajout d'une nouvelle fonction tactique par exemple.

La prise en compte conforme à l'invention de ces sections de vol permet, notamment, de remédier aux trois problèmes indiqués ci-dessus. Plus précisément :
- le fait de proposer un modèle de section de vol générique, dont le fonctionnement est régi par un ensemble de règles uniques permet de supprimer la nécessité d'établir des règles différentes pour chacune des opérations spécifiques envisagées. Il en résulte une réduction significative de la complexité en termes de réalisation, de développement logiciel, de validation,... ;
- la section de vol étant un élément unique, la combinatoire d'enchaînement des sections de vol est considérablement réduite par rapport aux solutions usuelles qui doivent être robustes pour tout enchaînement. De même, à la différence de l'art antérieur pour lequel les opérations peuvent se superposer (avec la complexité induite de devoir définir une solution qui soit robuste dans tous les cas possibles), les sections de vol s'enchaînent, successivement, sans se superposer, le point de fin d'une section de vol quelconque correspondant au point de début de la section de vol qui lui succède directement ; et
- les transitions sont toujours gérées (directement et complètement), car elles sont intrinsèques à la définition de la section de vol. Ainsi, lors de la création d'une section de vol, on sait comment la transition entre deux sections successives sera réalisée, à partir des caractéristiques de ladite transition.

Par conséquent, un plan de vol complexe usuel, constitué de multiples consignes pouvant même se chevaucher, devient, grâce aux sections de vol conformes à l'invention, un plan de vol simple avec des sections de vol aux propriétés standards. On remplace ainsi la multitude d'opérations usuelles par des éléments successifs présentant des propriétés bien définies. Leur enchaînement devient plus simple et on empêche des superpositions qui rendent un plan de vol complexe.

Une section de vol peut présenter au moins l'un des types suivants :
- une section de montée ;
- une section de descente ;
- une section à vitesse constante ; et
- une section à altitude constante.

Une section de vol est donc un élément générique du plan de vol, composé d'une transition suivie d'un palier. Chaque palier et chaque transition associée possèdent leurs propriétés propres. En particulier, chaque section de vol est définie, avantageusement, à l'aide au moins des caractéristiques suivantes :
- un point de route correspondant au point de début de section ;
- un point de route correspondant au point de fin de section ;
- le type de transition ;
- le mode de transition ;
- la vitesse de transition ;
- l'altitude du palier ; et
- la vitesse du palier ;

Le type de transition envisagé peut correspondre à l'un des types suivants :
- une montée vers un point donné ;
- une descente vers un point donné ;
- une montée à partir d'un point donné ;
- une descente à partir d'un point donné ; et
- le maintien d'une altitude constante.

En outre, avantageusement, au moins une section de vol du profil vertical est définie, de plus, à l'aide d'une contrainte de temps au point de début de section. Dans ce cas, la vitesse de l'aéronef est adaptée pour tenir cette contrainte de temps audit point de début de section.

Par ailleurs, de façon avantageuse, pour réviser le profil vertical d'un plan de vol, on peut réaliser au moins l'une des opérations suivantes :
- on insère une nouvelle section de vol dans le plan de vol ;
- on modifie une section de vol dudit plan de vol, en modifiant au moins certaines de ses caractéristiques ;
- on supprime une section de vol dudit plan de vol.

Les sections de vol étant des entités entièrement compatibles entres elles, que l'on peut assembler ensemble pour former le plan de vol, tout le plan de vol conforme à l'invention est harmonisé, et il devient donc aisé de le modifier en insérant, en modifiant, et/ou en supprimant des sections de vol.

La présente invention permet ainsi d'obtenir, outre la simplification du plan de vol, une flexibilité non négligeable et une facilité d'évolution. En effet, grâce à l'invention, on peut aisément insérer par la suite d'autres types de fonctions, tels que des fonctions militaires ou des applications civiles utiles. Il suffit pour cela de définir la nouvelle fonction au travers des propriétés d'une ou plusieurs sections de vol, pour créer une ou plusieurs sections de vol correspondantes consécutives avec leurs propres caractéristiques, que l'on insère dans le plan de vol.

Par ailleurs, avantageusement, à l'étape d), on affiche, sur un écran de visualisation du poste de pilotage de l'aéronef, ledit profil vertical du plan de vol, ainsi qu'au moins toutes les caractéristiques dudit profil vertical susceptibles d'être modifiées par un opérateur, et on prévoit des moyens permettant à l'opérateur de modifier ces caractéristiques, qui sont prises en compte pour réviser ledit profil vertical. Ceci permet de faciliter une révision du plan de vol. Ledit profil vertical du plan de vol peut également être transmis à d'autres moyens utilisateurs, tels qu'un système de guidage automatique de l'aéronef par exemple.

La présente invention concerne également un dispositif de gestion automatique du profil vertical d'un plan de vol d'un aéronef, comprenant des points de route que doit survoler l'aéronef.

A cet effet, selon l'invention, ledit dispositif est remarquable en ce qu'il comporte :
- des premiers moyens permettant à un opérateur d'entrer des paramètres de gestion ;
- des deuxièmes moyens pour déterminer automatiquement une pluralité de sections de vol successives standardisées à partir de ces paramètres de gestion, chaque section de vol :
   - correspondant à l'un d'une pluralité de types prédéterminés de sections de vol et étant définie entre un point de début et un point de fin de section ; et
   - comprenant à la fois une phase de transition qui permet d'atteindre un palier et qui présente des caractéristiques particulières et ledit palier qui présente également des caractéristiques particulières, lesdits paramètres de gestion permettant de définir au moins certaines desdites caractéristiques ;
- des troisièmes moyens pour assembler ensemble automatiquement lesdites sections de vol successives ainsi déterminées de manière à former le profil vertical du plan de vol, le point de fin d'une section de vol quelconque correspondant le cas échéant au point de début de la section de vol qui lui succède directement ; et
- des quatrièmes moyens pour fournir le profil vertical du plan de vol ainsi formé à des moyens utilisateurs.

Avantageusement, ledit dispositif comporte, de plus, des moyens pour afficher sur un écran de visualisation ledit profil vertical du plan de vol, ainsi qu'au moins toutes les caractéristiques dudit profil vertical susceptibles d'être modifiées par un opérateur.

Dans un mode de réalisation particulier, ledit dispositif comporte également des moyens permettant à un opérateur de réaliser au moins l'une des opérations suivantes, dans le but de réviser le profil vertical d'un plan de vol :
- insérer une nouvelle section de vol dans le plan de vol ;
- modifier une section de vol dudit plan de vol, en modifiant au moins certaines de ses caractéristiques ;
- supprimer une section de vol dudit plan de vol.

La présente invention concerne également :
- un aéronef, en particulier un avion de transport, civil ou militaire, qui est muni d'un dispositif tel que celui précité ; et/ou
- un système d'aéronef, par exemple un système de guidage automatique, qui comprend un tel dispositif.

Les figures du dessin annexé feront bien comprendre comment l'invention peut être réalisée. Sur ces figures, des références identiques désignent des éléments semblables.
La figure 1 est le schéma synoptique d'un dispositif conforme à l'invention de gestion du profil vertical d'un plan de vol d'un aéronef.
La figure 2 montre deux graphiques superposés illustrant respectivement un plan de vol usuel et un plan de vol conforme à l'invention.
La figure 3 illustre schématiquement un affichage du profil vertical d'un plan de vol conforme à l'invention.
Les figures 4 et 5 sont deux graphiques illustrant respectivement deux types différents de transitions.
Les figures 6 et 7 sont deux graphiques illustrant respectivement deux exemples différents de sections de vol conformes à l'invention.
Les figures 8 et 9 sont deux graphiques illustrant deux exemples différents de plans de vol conformes à l'invention, respectivement dans le domaine civil et dans le domaine militaire.

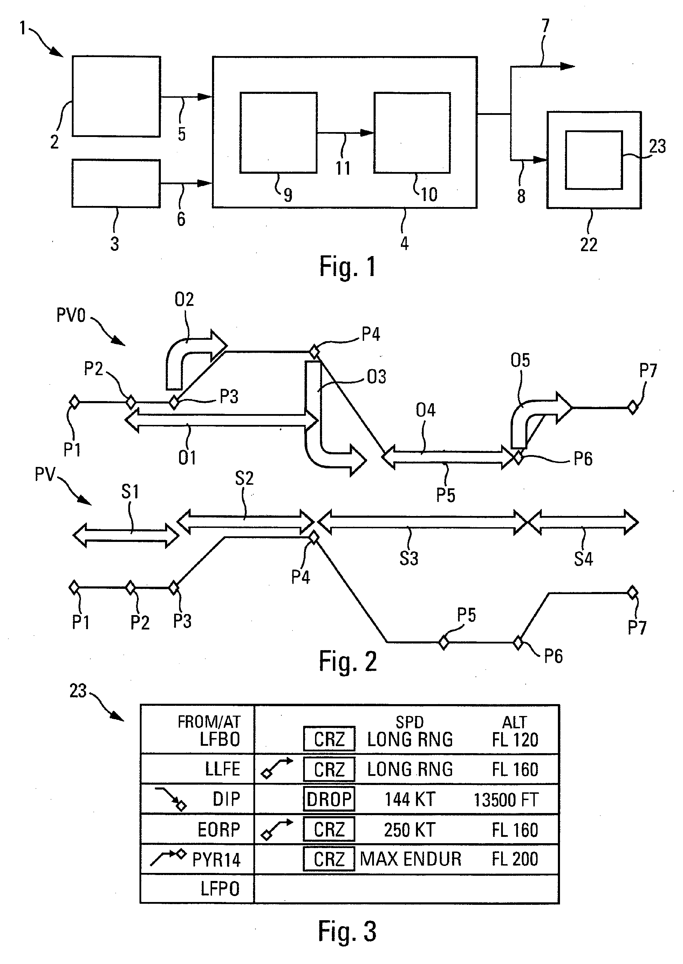

Le dispositif 1 conforme à l'invention et représenté schématiquement sur la figure 1, est destiné à la gestion au moins du profil vertical d'un plan de vol d'un aéronef AC, en particulier d'un avion de transport, militaire ou civil.

Un plan de vol comporte généralement au moins :
- des points de route (« waypoints » en anglais) P1 à P7 (figure 2), à savoir des points géographiques de navigation prédéfinis, que doit survoler l'aéronef AC et qui sont stockés dans une base de données de navigation ou définis explicitement par un opérateur, en particulier un pilote de l'aéronef AC ; et
- des informations (altitude, vitesse, ...) relatives à ces points de route.

Un tel plan de vol permet de construire une trajectoire de vol comportant :
- une trajectoire latérale définie dans le plan horizontal et comprenant des branches rectilignes qui se rejoignent auxdits points de route ; et
- une trajectoire verticale (ou profil vertical) définie dans le plan vertical.

Notamment pour gérer le profil vertical d'un plan de vol, ledit dispositif 1 qui est embarqué sur l'aéronef AC, en particulier un avion de transport militaire, comporte de façon usuelle :
- un ensemble 2 de sources d'informations usuelles, en particulier une base de données comprenant les points de route, qui sont susceptibles de fournir (et éventuellement de déterminer de façon usuelle) la trajectoire latérale dudit plan de vol, ainsi que des paramètres relatives au vol de l'aéronef AC ;
- des moyens 3, par exemple un clavier et/ou une souris d'ordinateur associés à un écran, qui permettent à un opérateur d'entrer dans ledit dispositif 1 des paramètres de gestion, précisés ci-dessous ;
- une unité centrale 4, qui est reliée par l'intermédiaire de liaisons 5 et 6 respectivement audit ensemble 2 et auxdits moyens 3 et qui fait par exemple partie d'un système de gestion de vol de type FMS (« Flight Management System » en anglais). Un tel système de gestion de vol permet la planification, la gestion, ainsi que la prédiction de vol, à la fois dans le plan horizontal et dans le plan vertical. Ladite unité centrale 4 a pour objet de déterminer, notamment, le profil vertical du plan de vol PV, en particulier à l'aide d'informations reçues dudit ensemble 2 et desdits moyens 3 ; et
- des moyens (liaisons 7, 8) pour transmettre au moins ce profil vertical et de préférence l'ensemble du plan de vol à des dispositifs utilisateurs précisés ci-dessous.

Selon l'invention, ladite unité centrale 4 comporte :
- des moyens 9 pour déterminer automatiquement une pluralité de sections de vol successives standardisées à partir de ces paramètres de gestion. Dans le cadre de la présente invention, chaque section de vol :
   - correspond à l'un d'une pluralité de types prédéterminés de sections de vol (dont chacun est régi par un ensemble de règles uniques prédéterminées)
   - est définie entre un point de début et un point de fin de section ; et
   - comprenant à la fois une phase de transition qui permet d'atteindre un palier et qui présente des caractéristiques particulières et ledit palier à atteindre qui présente également des caractéristiques particulières, lesdits paramètres de gestion permettant de définir au moins certaines desdites caractéristiques ;
- des moyens 10 qui sont reliés par l'intermédiaire d'une liaison 11 auxdits moyens 9 et qui sont formés de manière à assembler ensemble automatiquement lesdites sections de vol successives ainsi déterminées de manière à former le profil vertical du plan de vol, le point de fin d'une section de vol quelconque correspondant au point de début de la section de vol qui lui succède directement si cela se présente.

Ainsi, le dispositif 1 conforme à l'invention prend en compte un nouvel élément dans la définition du plan de vol, à savoir la section de vol (« cruise section » en anglais). Cette section de vol représente un élément générique qui, de part ses propriétés, permet de modéliser n'importe quel élément (ou partie) de vol qu'il soit civil ou militaire, ainsi que les transitions associées. Le plan de vol est donc constitué d'un enchaînement de sections de vol, chacune étant affectée de propriétés différentes.

On obtient ainsi une harmonisation et une simplification du plan de vol. Comme précisé ci-dessous, cette simplification s'applique également à toute nouvelle évolution du plan de vol, telle que l'ajout d'une nouvelle opération militaire par exemple.

La prise en compte conforme à l'invention de ces sections de vol présente également les avantages suivants :
- le fait de proposer un modèle de section de vol générique, dont le fonctionnement est régi par un ensemble de règles uniques permet de supprimer la nécessité d'établir des règles différentes pour chacune des opérations spécifiques envisagées. Il en résulte une réduction significative de la complexité en termes de réalisation, de développement logiciel, de validation,... ;
- la section de vol étant un élément unique, la combinatoire d'enchaînement des sections de vol est considérablement réduite par rapport aux solutions usuelles qui doivent être robustes pour tout enchaînement. De même, à la différence de l'art antérieur pour lequel les opérations peuvent se superposer (avec la complexité induite de devoir définir une solution qui soit robuste dans tous les cas possibles), les sections de vol s'enchaînent, successivement, sans se superposer. Le point de fin d'une section de vol quelconque correspond le cas échéant au point de début de la section de vol qui lui succède directement ; et
- les transitions sont toujours gérées (directement et complètement), car elles sont intrinsèques à la définition de la section de vol. Ainsi, lors de la création d'une section de vol, on sait comment la transition entre deux sections successives sera réalisée, à partir des caractéristiques de transition.

Sur la figure 2, on a représenté le profil vertical d'un plan de vol complexe PVO usuel qui comporte, notamment une phase de largage, et qui est constitué de multiples opérations O1 à O5 pouvant se superposer, comme cela est le cas pour O1 et O2. Plus précisément :
- O1 représente un segment à vitesse constante ;
- O2 représente une montée, par exemple à une altitude de croisière ;
- O3 représente une descente à l'altitude de largage ;
- O4 représente la phase de largage ; et
- O5 représente une montée.

Grâce aux sections de vol conformes à l'invention, ce plan de vol usuel PVO complexe devient un plan de vol PV simple avec des sections de vol S1 à S4 aux propriétés standards. Les plans de vol PVO et PV correspondent à une même mission. On remplace ainsi la multitude d'opérations O1 à O5 par des éléments successifs S1 à S4 présentant des propriétés bien définies. Leur enchaînement devient plus simple et on empêche des superpositions qui rendent un plan de vol complexe.

Une section de vol est donc un élément générique du plan de vol, composé d'une transition et d'un palier. Chaque palier et chaque transition associée possèdent leurs propriétés propres, comme indiqué ci-après.

| Propriétés des sections de vol | |
|---|---|
| Type de Section / Nom de Section | Type de la section volée : il peut s'agir d'un largage, d'un ravitaillement en vol, ou d'une section de croisière de type civile |
| Point de route de début | Point de route, sur lequel est ancrée la transition |
| Point de route de fin | Point de route de début de la section de vol suivante (sur lequel est ancrée la transition de la section de vol suivante) |
| Altitude du palier | Altitude à laquelle doit être volé le palier de la section |
| Vitesse du palier | Vitesse à laquelle doit être volé le palier de la section |
| Contrainte de temps | Permet de définir une contrainte de temps au point de route de début |

| Propriétés des transitions | |
|---|---|
| Type | Le type correspond à deux manières principales de voler la transition : initiation de la montée/descente depuis/vers le point de route de début. Il existe également un cas particulier pour lequel l'altitude entre deux sections successives est constante, comme précisé ci-dessous |
| Mode | Le mode correspond à la manière d'effectuer la transition. Par exemple, l'aéronef peut effectuer la transition à régime de poussée fixe, ou avec une pente ou une vitesse verticale prédéfinie |
| Vitesse de transition | Vitesse à laquelle la transition doit être volée |

Les sections de vol étant génériques, elles peuvent prendre la forme de n'importe quel élément de vol. Une section de vol peut notamment représenter :
- un segment à vitesse ou à Mach constant ;
- un segment de vol à basse vitesse ;
- un largage ;
- un ravitaillement en vol ; et
- une mission de secours.

Ces fonctionnalités sont connues par le pilote, car il va introduire le segment dans un but particulier, mais elles ne sont pas nécessaires au système FMS qui va organiser son plan de vol de la même manière pour toutes les fonctions. Du point de vue des sections de vol, le système FMS voit un largage et un segment à vitesse constante d'une manière équivalente, mais seulement définis par des propriétés différentes. Ainsi :
- le point de route de début est le point de route d'ancrage de la section. Il dépend du type de transition associé ;
- le point de route de fin est le point de route de début de la section suivante ;
- l'altitude de la section correspond à l'altitude atteinte après la transition. Celle-ci peut être définie en pieds ou en niveau de vol ;
- la vitesse du palier correspond à la vitesse visée pour voler le palier. Elle peut être différente de celle de la transition. Elle peut être définie en noeuds ou en Mach, ou bien en critère d'optimisation de vol (mode de vitesse économique par exemple, type « cost index » ou aurte paramètre d'optimisation type endurance maximum, vitesse maximum, ...) ; et
- la contrainte de temps permet de définir une contrainte sur l'heure d'arrivée au début de la section. Si une contrainte de temps est définie, la vitesse de l'aéronef sera adaptée afin de respecter la contrainte de temps.

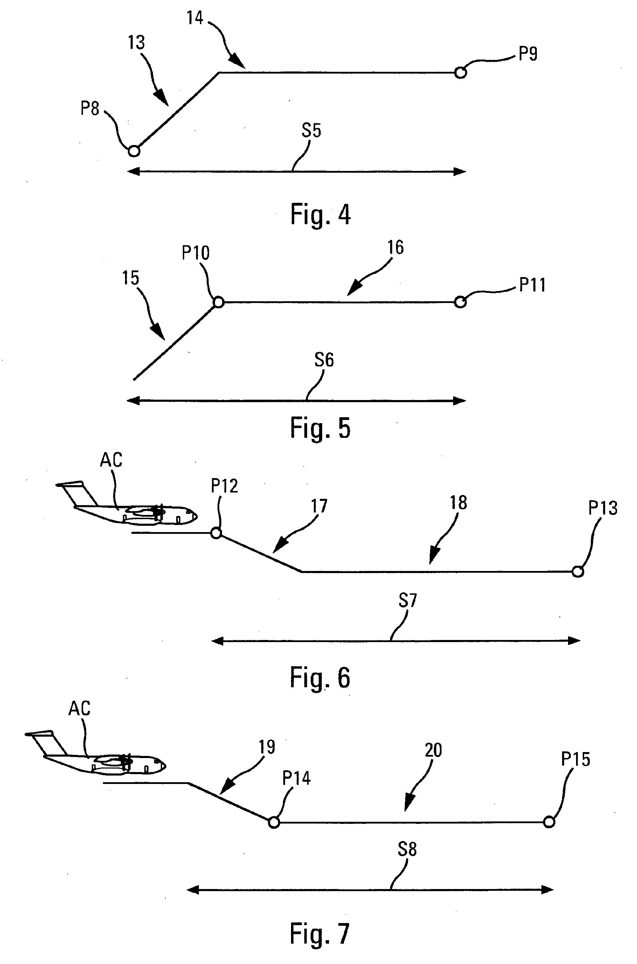

En outre, le type de transition correspond à la géométrie de la transition. Il existe plusieurs schémas de transition, précisés ci-après, en fonction de la manoeuvre envisagée. Ainsi :
- une transition de type « FROM » (terme anglais signifiant « depuis ») est une transition qui est structurée de la manière représentée sur la figure 4. Dans ce schéma, le point de début P8 est spécifié de telle sorte que l'on doit démarrer la transition exactement en ce point. La transition 13 est alors effectuée de manière à rejoindre le palier 14 depuis le point de début P8. Le point exact à partir duquel l'aéronef vole à la bonne altitude de palier, ainsi qu'avec les autres paramètres de section corrects, n'est pas contrôlé par le pilote. Seul le point P8 de départ de la transition et le point P9 de fin de la section S5 sont définis ;
- une transition de type « TO » (terme anglais signifiant « en direction de ») est une transition qui est structurée de la manière représentée sur la figure 5. Dans ce schéma de transition (dont la transition effective est désignée par 15), le point P10 de début de palier 16 est spécifié par l'opérateur. Le dispositif 1 calcule la trajectoire afin d'atteindre les paramètres requis (altitude, vitesse,...) exactement en ce point P10. Seul ce point P10 et le point P11 de fin de la section S6 sont imposés ; et
- le cas particulier (non représenté) où l'altitude entre deux sections successives reste constante. Dans ce cas, le changement de section correspond à la modification d'un autre paramètre tel que la vitesse par exemple.

Par ailleurs :
- le mode de la transition d'une section de vol correspond au couplage régime moteur et commandes verticales à utiliser lors de la transition. On peut, par exemple, demander à l'aéronef de maintenir une vitesse constante ainsi qu'un régime moteur constant, ou alors une pente d'angle constant associée à une vitesse constante ou variable et gérée par les moteurs ; et
- la vitesse de transition est la vitesse durant la transition, définie en noeuds ou en Mach.

Lorsque tous les paramètres (ou caractéristiques) précités sont définis, la section de vol est complètement définie.

Un exemple de révision du plan de vol montrant la conversion de ces paramètres en un élément de plan de vol civil et sa mise en oeuvre pratique est représentée sur la figure 6. La section de vol S7 définie par la révision s'étend de P12 à P13. Elle comporte une transition 17 qui permet d'atteindre l'altitude du palier 18, et à la vitesse désirée grâce à une vitesse intermédiaire. L'altitude et la vitesse de départ (avant la section) sont caractéristiques de la section précédente et ne rentrent pas dans les propriétés de la section S7 courante.

En outre, la section de vol S8 représentée sur la figure 7 est une section de vol à application militaire, avec une phase de largage 20 entre les points P14 et P15 (avec une descente 19). La manière de la définir est exactement la même que dans le cas d'une section civile. Elle est également volée de la même façon. Cela permet d'ajouter aisément une telle section, avant ou après, une autre section.

Le profil vertical d'un plan de vol est donc constitué d'une pluralité de telles sections de vol successives assemblées ensemble.

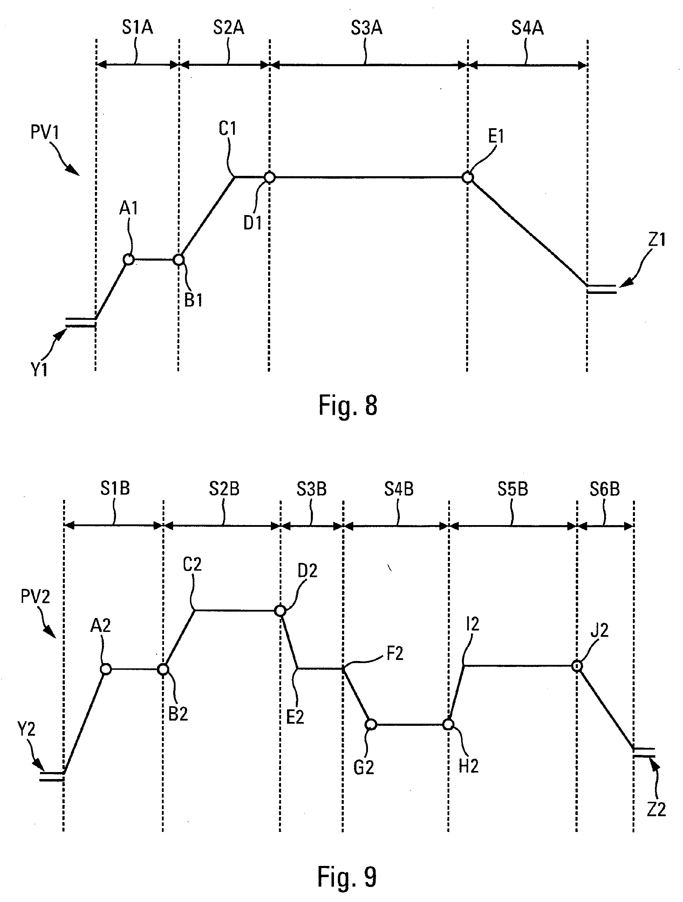

A titre d'illustration, on a représenté sur la figure 8 un plan de vol PV1 qui est typique d'une application civile. Ce plan de vol PV1 est constitué :
- d'une montée (jusqu'à A1) à partir du départ Y1, afin de rejoindre une altitude de croisière (palier entre A1 et B1) ;
- d'une révision d'altitude modifiant l'altitude de croisière, menant à un nouveau palier (transition entre B1 et C1, palier entre C1 et D1) ;
- d'une révision en vitesse afin d'obtenir un segment à vitesse ou Mach constant (vitesse constante entre D1 et E1) ; et
- d'une descente permettant de rejoindre la destination (descente après E1 jusqu'à la destination Z1).

Chacune de ces étapes constitue une section de vol avec ses caractéristiques propres présentées dans le tableau suivant :

| Propriétés de la section S1A | |
|---|---|
| Type/Nom | Montée |
| Point de route de début | A1 |
| Point de route de fin | B1 |
| Altitude du palier | 5000 pieds (FT) |
| Vitesse du palier | 250 noeuds (KT) |

| Propriétés de la transition associée à la section S1A | |
|---|---|
| STEP TO/FROM | TO |
| Mode | Angle constant |
| Vitesse de transition | 200 noeuds |

| Propriétés de la section S2A | |
|---|---|
| Type/Nom | Section à altitude constante |
| Point de route de début | B1 |
| Point de route de fin | D1 |
| Altitude du palier | FL300 |
| Vitesse du palier | 250 noeuds |

| Propriétés de la transition associée à la section S2A | |
|---|---|
| STEP FROM/TO | FROM |
| Mode | Poussée constante, vitesse constante |
| Vitesse de transition | 250 noeuds |

| Propriétés de la section S3A | |
|---|---|
| Type/Nom | Section à vitesse constante |
| Point de route de début | D1 |
| Point de route de fin | E1 |
| Altitude du palier | FL300 |
| Vitesse du palier | Mach 0,7 |

| Propriétés de la transition associée à la section S3A | |
|---|---|
| STEP TO/FROM | Palier vers un point de route |
| Mode | Poussée constante, vitesse constante |
| Vitesse de transition | 260 noeuds |

| Propriétés de la section S4A | |
|---|---|
| Type/Nom | Descente |
| Point de route de début | E1 |
| Point de route de fin | Arrivée Z1 |
| Altitude du palier | FL300 |
| Vitesse du palier | 200 noeuds |

| Propriétés de la transition associée à la section S4A | |
|---|---|
| STEP TO/FROM | TO |
| MODE | Angle constant |
| Vitesse de transition | 220 noeuds |

Dans le cas d'un plan de vol militaire, d'autres types de sections peuvent intervenir, qui sont associées à des fonctions militaires. Ces sections sont traitées de la même manière que les sections civiles sauf que leur but est différent.

A titre d'illustration, on a représenté sur la figure 9 un plan de vol PV2 qui est typique d'une application militaire avec un largage et un ravitaillement en vol au cours du vol. Ce plan de vol PV2 comprend :
- tout d'abord, une phase de montée (du départ Y2 à A2) pour rejoindre l'altitude de croisière (entre A2 et B2) ;
- un ravitaillement en vol à une altitude supérieure (transition entre B2 et C2, puis ravitaillement entre C2 et D2) ;
- une section intercalaire afin de revenir à une altitude de croisière avant le largage (on revient à l'altitude de croisière en E2) ;
- une section de largage (transition pour être à l'altitude de largage en G2, puis largage jusqu'à H2) ;
- une section intercalaire afin de revenir à l'altitude de croisière (retour à l'altitude de croisière en I2) ; et
- une descente (à partir de J2) pour arriver à la destination Z2.

Comme on peut le constater, les sections militaires s'insèrent entre deux sections civiles tout à fait aisément grâce au caractère générique des sections. Il n'existe aucun problème de transition ou de séquençage entre les éléments.

Chacune de ces étapes constitue une section de vol avec ses caractéristiques propres présentées dans le tableau suivant :

| Propriétés de la section S1B | |
|---|---|
| Type/Nom | Montée |
| Point de route de début | A2 |
| Point de route de fin | B2 |
| Altitude du palier | FL200 |
| Vitesse du palier | 250 noeuds |

| Propriétés de la transition associée à la section S1B | |
|---|---|
| STEP TO/FROM | TO |
| Mode | Angle constant |
| Vitesse de transition | 200 noeuds |

| Propriétés de la section S2B | |
|---|---|
| Type/Nom | Ravitaillement |
| Point de route de début | B2 |
| Point de route de fin | D2 |
| Altitude du palier | FL250 |
| Vitesse du palier | 200 noeuds |

| Propriétés de la transition associée à la section S2B | |
|---|---|
| STEP TO/FROM | FROM |
| Mode | Poussée constante |
| Vitesse de transition | 220 noeuds |

| Propriétés de la section S3B | |
|---|---|
| Type/Nom | Changement de palier |
| Point de route de début | D2 |
| Point de route de fin | F2 |
| Altitude du palier | FL200 |
| Vitesse du palier | 180 noeuds |

| Propriétés de la transition associée à la section S3B | |
|---|---|
| STEP TO/FROM | FROM |
| Mode | Angle constant |
| Vitesse de transition | 200 noeuds |

| Propriétés de la section S4B | |
|---|---|
| Type/Nom | Largage |
| Point de route de début | G2 |
| Point de route de fin | H2 |
| Altitude du palier | 5000 pieds |
| Vitesse du palier | 130 noeuds |

| Propriétés de la transition associée à la section S4B | |
|---|---|
| STEP TO/FROM | TO |
| Mode | Angle constant |
| Vitesse de transition | 180 noeuds |

| Propriétés de la section S5B | |
|---|---|
| Type/Nom | Changement d'altitude |
| Point de route de début | H2 |
| Point de route de fin | J2 |
| Altitude du palier | FL200 |
| Vitesse du palier | 250 noeuds |

| Propriétés de la transition associée à la section S5B | |
|---|---|
| STEP TO/FROM | FROM |
| Mode | Poussée constante |
| Vitesse de transition | 200 noeuds |

| Propriétés de la section S6B | |
|---|---|
| Type/Nom | Descente |
| Point de route de début | J2 |
| Point de route de fin | Arrivée Z2 |
| Altitude du palier | FL200 |
| Vitesse du palier | 180 noeuds |

| Propriétés de la transition associée à la section S6B | |
|---|---|
| STEP TO/FROM | TO |
| Mode | Angle constant |
| Vitesse de transition | 190 noeuds |

Par ailleurs, le dispositif 1 comporte, de plus, des moyens 22 pour afficher sur un écran de visualisation 23 ledit profil vertical du plan de vol, ainsi qu'au moins toutes les caractéristiques dudit profil vertical susceptibles d'être modifiées par un opérateur, qui sont reçus de l'unité centrale 4 par la liaison 8. L'affichage est réalisé, de préférence, à l'aide d'une page de management de mission telle que représentée à titre d'exemple sur la figure 3. Ledit dispositif 1 comporte également des moyens, de préférence les moyens 3, qui permettant à l'opérateur, notamment un pilote, de modifier ces caractéristiques qui sont prises en compte pour réviser ledit profil vertical. Pour réaliser une révision, on peut également insérer une section par la page sur laquelle figurent les points de route du plan de vol.

Les sections de vol étant des entités du plan de vol, entièrement compatibles entres elles, que l'on peut assembler ensemble pour former le plan de vol, tout le plan de vol est harmonisé, et il devient donc aisé de le modifier en insérant, en modifiant, et/ou en supprimant des sections de vol.

L'organisation et la gestion de ces sections de vol s'effectue, de préférence, à travers une interface correspondant à ladite page de management de mission. Cette page est une page permettant au pilote d'avoir en un coup d'oeil tout le récapitulatif des éléments importants de son vol avec toutes les différentes sections, civiles et militaires. En plus d'être une représentation de tout le vol, cette page permet de modifier chaque section de vol. Elle permet notamment de modifier les paramètres des transitions ou des sections, comme les vitesses, les altitudes,...

Chaque section possède un bouton qui permet directement d'accéder à sa modification. Le pilote peut ainsi gérer tout le vol, y compris les phases militaires, depuis une seule page. La page permet également à l'utilisateur de vérifier la cohérence du plan de vol.

L'exemple représenté sur la figure 3 comprend cinq sections de vol, dont un largage (DROP) à 13500 pieds et un palier au niveau de vol 200 à partir du point PYR14. Les points de route sont LFBO, LLFE, DIP, EORP, PYR14 et LFPO, et pour chaque section de vol l'affichage indique la vitesse (« SPD ») et l'altitude (« ALT »).

Le dispositif 1 peut également fournir ledit profil vertical du plan de vol à des systèmes utilisateurs de l'aéronef (via la liaison 7), et en particulier à un système de guidage automatique usuel qui guide alors automatiquement l'aéronef le long du plan de vol reçu.

## Revendications

1. Procédé de gestion automatique du profil vertical d'un plan de vol d'un aéronef (AC), comprenant des points de route que doit survoler l'aéronef (AC),
**caractérisé en ce que** :
a) on prévoit des moyens (2) permettant à un opérateur d'entrer des paramètres de gestion ;
b) on détermine une pluralité de sections de vol successives standardisées (S1 à S8) à partir de ces paramètres de gestion, chaque section de vol :
• correspondant à l'un d'une pluralité de types prédéterminés de sections de vol et étant définie entre un point de début et un point de fin de section ; et
• comprenant à la fois une phase de transition qui permet d'atteindre un palier et qui présente des caractéristiques particulières et ledit palier qui présente également des caractéristiques particulières, lesdits paramètres de gestion permettant de définir au moins certaines desdites caractéristiques ;
c) on assemble ensemble lesdites sections de vol successives ainsi déterminées de manière à former le profil vertical (PV, PV1, PV2) du plan de vol, le point de fin d'une section de vol quelconque correspondant le cas échéant au point de début de la section de vol qui lui succède directement ; et
d) on fournit le profil vertical du plan de vol ainsi formé à des moyens utilisateurs (22).

2. Procédé selon la revendication 1,
**caractérisé en ce que** chaque section de vol est définie à l'aide au moins des caractéristiques suivantes :
- un point de route correspondant au point de début de section ;
- un point de route correspondant au point de fin de section ;
- un type de transition ;
- un mode de transition ;
- une vitesse de transition ;
- une altitude du palier ; et
- une vitesse du palier.

3. Procédé selon la revendication 2,
**caractérisé en ce que** le type de transition correspond à l'un des types suivants :
- une montée vers un point donné ;
- une descente vers un point donné ;
- une montée à partir d'un point donné ;
- une descente à partir d'un point donné ; et
- un maintien d'une altitude constante.

4. Procédé selon l'une des revendications 1 à 3,
**caractérisé en ce qu'**au moins une section de vol est définie, de plus, à l'aide d'une contrainte de temps au point de début de section, la vitesse de l'aéronef étant adaptée pour tenir cette contrainte de temps audit point de début de section.

5. Procédé selon l'une quelconque des revendications précédentes, **caractérisé en ce que** le type d'au moins une section de vol est l'un des types suivants :
- une section de montée ;
- une section de descente ;
- une section à vitesse constante ; et
- une section à altitude constante.

6. Procédé selon l'une quelconque des revendications précédentes, **caractérisé en ce que**, pour réviser le profil vertical d'un plan de vol, on réalise au moins l'une des opérations suivantes :
- on insère une nouvelle section de vol dans le plan de vol ;
- on modifie une section de vol dudit plan de vol, en modifiant au moins certaines de ses caractéristiques ;
- on supprime une section de vol dudit plan de vol.

7. Procédé selon l'une quelconque des revendications précédentes, **caractérisé en ce qu'**à l'étape d), on affiche sur un écran de visualisation (23) ledit profil vertical du plan de vol, ainsi qu'au moins toutes les caractéristiques dudit profil vertical susceptibles d'être modifiées par un opérateur, et on prévoit des moyens permettant à l'opérateur de modifier ces caractéristiques, qui sont prises en compte pour réviser ledit profil vertical.

8. Dispositif de gestion automatique au moins du profil vertical d'un plan de vol d'un aéronef (AC), comprenant des points de route que doit survoler l'aéronef (AC),
**caractérisé en ce qu'**il comporte :
- des premiers moyens (3) permettant à un opérateur d'entrer des paramètres de gestion ;
- des deuxièmes moyens (9) pour déterminer automatiquement une pluralité de sections de vol successives standardisées à partir de ces paramètres de gestion, chaque section de vol :
• correspondant à l'un d'une pluralité de types prédéterminés de sections de vol et étant définie entre un point de début et un point de fin de section ; et
• comprenant à la fois une phase de transition qui permet d'atteindre un palier et qui présente des caractéristiques particulières et ledit palier qui présente également des caractéristiques particulières, lesdits paramètres de gestion permettant de définir au moins certaines desdites caractéristiques ;
- des troisièmes moyens (10) pour assembler ensemble automatiquement lesdites sections de vol successives ainsi déterminées de manière à former le profil vertical du plan de vol, le point de fin d'une section de vol quelconque correspondant le cas échéant au point de début de la section de vol qui lui succède directement ; et
- des quatrièmes moyens (7, 8) pour fournir le profil vertical du plan de vol ainsi formé à des moyens utilisateurs.

9. Dispositif selon la revendication 8,
**caractérisé en ce qu'**il comporte, de plus, des moyens (22) pour afficher sur un écran de visualisation (23) ledit profil vertical du plan de vol, ainsi qu'au moins toutes les caractéristiques dudit profil vertical susceptibles d'être modifiées par un opérateur.

10. Dispositif selon l'une des revendications 8 et 9,
**caractérisé en ce qu'**il comporte, de plus, des moyens (3) permettant à un opérateur de réaliser au moins l'une des opérations suivantes dans le but de réviser le profil vertical d'un plan de vol :
- insérer une nouvelle section de vol dans le plan de vol ;
- modifier une section de vol dudit plan de vol, en modifiant au moins certaines de ses caractéristiques ;
- supprimer une section de vol dudit plan de vol.

11. Aéronef,
**caractérisé en ce qu'**il comporte un dispositif (1) tel que celui spécifié sous l'une quelconque des revendications 8 à 10.

## Patentansprüche

1. Verfahren zum automatischen Verwalten des Vertikalprofils eines Flugplans eines Flugzeugs (AC), das Routenpunkte umfasst, die das Flugzeug (AC) überfliegen muss,
**dadurch gekennzeichnet, dass**
a) Mittel (2) vorgesehen werden, die einem Bediener die Eingabe von Verwaltungsparametern ermöglichen;
b) ausgehend von diesen Verwaltungsparametern eine Vielzahl von standardisierten aufeinander folgenden Flugabschnitten (S1 bis S8) bestimmt wird, wobei jeder Flugabschnitt:
• einem aus einer Vielzahl von vorbestimmten Flugabschnittstypen entspricht und zwischen einem Abschnittsanfangspunkt und einem Abschnittsendpunkt definiert wird; und
• gleichzeitig eine Übergangsphase, die das Erreichen einer Stufe ermöglicht und die besondere Merkmale aufweist, und die Stufe, die auch besondere Merkmale aufweist, umfasst, wobei die Verwaltungsparameter die Definition mindestens bestimmter der Merkmale ermöglichen;
c) die so bestimmten aufeinander folgenden Flugabschnitte zusammengefügt werden, derart, dass sie das Vertikalprofil (PV, PV1, PV2) des Flugplans bilden, wobei der Endpunkt eines beliebigen Flugabschnitts gegebenenfalls dem Anfangspunkt des Flugabschnitts entspricht, der ihm unmittelbar folgt; und
d) das so gebildete Vertikalprofil des Flugplans Benutzermitteln (22) bereitgestellt wird.

2. Verfahren nach Anspruch 1,
**dadurch gekennzeichnet, dass** jeder Flugabschnitt mindestens mit Hilfe der folgenden Merkmale definiert wird:
- ein Routenpunkt, der dem Abschnittsanfangspunkt entspricht;
- ein Routenpunkt, der dem Abschnittsendpunkt entspricht;
- ein Übergangstyp;
- ein Übergangsmodus;
- eine Übergangsgeschwindigkeit;
- eine Flughöhe der Stufe; und
- eine Geschwindigkeit der Stufe.

3. Verfahren nach Anspruch 2,
**dadurch gekennzeichnet, dass** der Übergangstyp einem der folgenden Typen entspricht:
- ein Steigflug in Richtung eines bestimmten Punktes;
- ein Sinkflug in Richtung eines bestimmten Punktes;
- ein Steigflug ausgehend von einem bestimmten Punkt;
- ein Sinkflug ausgehend von einem bestimmten Punkt; und
- ein Halten einer konstanten Flughöhe.

4. Verfahren nach einem der Ansprüche 1 bis 3,
**dadurch gekennzeichnet, dass** mindestens ein Flugabschnitt, des Weiteren, mit Hilfe eines Zeitfaktors am Abschnittsanfangspunkt definiert wird, wobei die Geschwindigkeit des Flugzeugs angepasst ist, um diesen Zeittaktor am Abschnittsanfangspunkt zu halten.

5. Verfahren nach einem der vorhergehenden Ansprüche,
**dadurch gekennzeichnet, dass** der Typ mindestens eines Flugabschnitts einer der folgenden Typen ist:
- ein Steigflugabschnitt;
- ein Sinkflugabschnitt;
- ein Abschnitt mit konstanter Geschwindigkeit; und
- ein Abschnitt mit konstanter Flughöhe.

6. Verfahren nach einem der vorhergehenden Ansprüche,
**dadurch gekennzeichnet, dass**, um das Vertikalprofil eines Flugplans zu überarbeiten, mindestens einer der folgenden Arbeitsgänge realisiert wird:
- ein neuer Flugabschnitt wird in des Flugplans eingegeben;
- ein Flugabschnitt den Flugplan wird verändert, indem mindestens eines seiner Merkmale verändert wird;
- ein Flugabschnitt des Flugplans wird gelöscht.

7. Verfahren nach einem der vorhergehenden Ansprüche, **dadurch gekennzeichnet, dass** in Schritt d) auf einem Anzeigebildschirm (23) das Vertikalprofil des Flugplans sowie mindestens sämtliche Merkmale des Vertikalprofils angezeigt werden, die durch einen Bediener verändert werden können, und Mittel vorgesehen werden, die dem Bediener die Veränderung dieser Merkmale ermöglichen, die berücksichtigt werden, um das Vertikalprofil zu überarbeiten.

8. Vorrichtung zum automatischen Verwalten mindestens des Vertikalprofils eines Flugplans eines Flugzeugs (AC), das Routenpunkte umfasst, die das Flugzeug (AC) überfliegen muss,
**dadurch gekennzeichnet, dass** sie Folgendes aufweist:
- erste Mittel (3), die einem Bediener die Eingabe von Verwaltungsparametern ermöglichen;
- zweite Mittel (9), um ausgehend von diesen Verwaltungsparametern automatisch eine Vielzahl von standardisierten aufeinander folgenden Flugabschnitten zu bestimmen, wobei jeder Flugabschnitt:
• einem aus einer Vielzahl von vorbestimmten Flugabschnittstypen entspricht und zwischen einem Abschnittsanfangspunkt und einem Abschnittsendpunkt definiert wird; und
• gleichzeitig eine Übergangsphase, die das Erreichen einer Stufe ermöglicht und die besondere Merkmale aufweist, und die Stufe, die auch besondere Merkmale aufweist, umfasst, wobei die Verwaltungsparameter die Definition mindestens bestimmter der Merkmale ermöglichen;
- dritte Mittel (10), um die so bestimmten aufeinander folgenden Flugabschnitte automatisch zusammenzufügen, derart, dass sie das Vertikalprofil des Flugplans bilden, wobei der Endpunkt eines beliebigen Flugabschnitts gegebenenfalls dem Anfangspunkt des Flugabschnitts entspricht, der ihm unmittelbar folgt; und
- vierte Mittel (7, 8), um das so gebildete Vertikalprofil des Flugplans Benutzermitteln bereitzustellen.

9. Vorrichtung nach Anspruch 8,
**dadurch gekennzeichnet, dass** sie, des Weiteren, Mittel (22) aufweist, um auf einem Anzeigebildschirm (23) das Vertikalprofil des Flugplans sowie mindestens sämtliche Merkmale des Vertikalprofils anzuzeigen, die durch einen Bediener verändert werden können.

10. Vorrichtung nach einem der Ansprüche 8 und 9,
**dadurch gekennzeichnet, dass** sie, des Weiteren, Mittel (3) aufweist, die einem Bediener die Realisierung mindestens eines der folgenden Arbeitsgänge ermöglicht, um das Vertikalprofil eines Flugplans zu überarbeiten:
- Eingeben eines neuen Flugabschnitts in den Flugplan;
- Verändern eines Flugabschnitts des Flugplans, indem mindestens eines seiner Merkmale verändert wird;
- Löschen eines Flugabschnitts des Flugplans.

11. Flugzeug,
**dadurch gekennzeichnet, dass** es eine Vorrichtung (1) nach einem der Ansprüche 8 bis 10 aufweist.

## Claims

1. A method for automatically managing the vertical profile of a flight plan of an aircraft (AC), comprising waypoints to be flown over by the aircraft (AC),
**characterized in that**:
a) means (2) are provided allowing an operator to enter managing parameters;
b) a plurality of successive standard cruise sections (S1 to S8) is determined from these managing parameters, each cruise section:
• corresponding to one of a plurality of predetermined types of cruise sections and being defined between a section starting point and a section ending point; and
• comprising both a transition phase allowing to reach a level and having particular features and said level also having particular features, said managing parameters allowing to define at least some of said features;
c) said thus determined successive flight sections are joined together so as to form automatically the vertical profile of the flight plan, the ending point of any cruise section corresponding if applicable to the starting point of the cruise section directly following it;
d) the thus formed vertical profile of the flight plan is supplied to user means (22).

2. The method according to claim 1,
**characterized in that** each cruise section is defined using at least the following features:
- a waypoint corresponding to the section starting point;
- a waypoint corresponding to the section ending point;
- a transition type;
- a transition mode;
- a transition speed;
- a level altitude; and
- a level speed.

3. The method according to claim 2,
**characterized in that** the transition type corresponds to one of the following types:
- climbing toward a given point;
- descending to a given point;
- climbing from a given point;
- descending from a given point; and
- maintaining a constant altitude.

4. The method according to any of claims 1 to 3,
**characterized in that** at least one cruise section is further defined, using a time constraint at the section starting point, the speed of the aircraft being adapted so as to fulfill this time constraint at said section starting point.

5. The method according to any one of the preceding claims,
**characterized in that** the type of at least one cruise section is one of the following types:
- a climbing section:
- a descent section:
- a constant speed section; and
- a constant altitude section.

6. The method according to any one of the preceding claims,
wherein, for reviewing the vertical profile of a flight plan, at least one of the following operations is carried out:
- a new cruise section is inserted into the flight plan;
- a cruise section of said flight plan is modified, modifying at least some of its features; and
- a cruise section is removed from said flight plan.

7. The method according to any one of the preceding claims,
**characterized in that** at step d), on a display screen (23), said vertical profile of the flight plan is displayed, as well as at least all the features of said vertical profile able to be modified by an operator, and means are provided, allowing the operator to modify these features, to be taken into consideration for reviewing said vertical profile.

8. A device for automatically managing the vertical profile of a flight plan of an aircraft (AC), comprising waypoints to be flown over by the aircraft (AC),
**characterized in that** it comprises:
- first means (3) allowing an operator to enter managing parameters;
- second means (9) for determining automatically a plurality of successive standard cruise sections from these managing parameters, each cruise section:
• corresponding to one of a plurality of predetermined types of cruise sections and being defined between a section starting point and a section ending point; and
• comprising both a transition phase allowing to reach a level and having particular features and said level also having particular features, said managing parameters allowing to define at least some of said features;
- third means (10) for joining together automatically said successive cruise sections being determined so as to form the vertical profile of the flight plan, the ending point of any cruise section corresponding if applicable to the starting point of the cruise section directly following it; and
- fourth means (7, 8) for supplying the thus formed vertical profile of the flight plan to user means.

9. The device according to claim 8,
**characterized in that** it further comprises means (22) for displaying on a display screen (23) said vertical profile of the flight plan, as well as at least all the features of said vertical profile able to be modified by an operator.

10. The device according to any of claims 8 and 9,
**characterized in that** it further comprises means (3) allowing an operator to carry out at least one of the following operations, with the aim at reviewing the vertical profile of a flight plan:
- inserting a new cruise section into the flight plan;
- modifying a cruise section of said flight plan, modifying at least some of its features; and
- removing a cruise section from said flight plan.

11. aircraft,
**characterized in that** it comprises a device (1) such as specified in any one of claims 8 to 10.
